# EUROPEAN PATENT APPLICATION

(11) **EP 1 944 839 A2**
(43) Date of publication of application: **16.07.2008**
(21) Application number: 08150186.8
(22) Date of filing: 11.01.2008
(51) Int. Cl.: H01S 3/08

(54) **Laser cavity particularly for laser welding apparatus**

(30) Priority: 12.01.2007 US 622657
(71) Applicant: Peacock LLC, Cheyenne WY 82003 (US)
(72) Inventor: Bizzio, Nickolas, 98000 Monte Carlo (MC)
(74) Representative: Reniero, Cirillo Silvano

(57) **Abstract**

The present invention relates to a laser cavity, comprising: at least one resonator having at least one source of exciting light, and at least one laser rod excited by the at least one light source; at least one mirror member designed to produce at least one output laser beam, the laser cavity further comprising at least one shield member (S) having at least one through opening (A), the shield member being movably mounted between a working position, in which the shield member intercepts a respective laser beam (L) at the at least one through opening (A) thereof, and a rest position, in which the shield member does not interfere with the respective laser beam (L).

## Description

The present invention relates to a laser cavity, particularly, but not exclusively, suitable for laser welding apparatus or welder designed to carry out a spot welding processing, specifically welding working with both very small and controlled spots and larger size spots, e. g. as required in dental or goldsmith field.

As it is apparent for a person skilled in the art, for some specific applications laser welding has a number of advantages over conventional welding processes, e.g. lower heat production, as only heat required for generating localized casting of the material to be welded is produced, possibility of carrying out weldings of high quality with great accuracy and productivity (relatively high run rates, sometimes of about 10 m/min) even when using materials having different physical characteristics or that cannot be welded according to conventional technologies, and possibility of welding in the air with no weld material.

A laser cavity designed to be applied in a welding apparatus generally comprises a laser rod made of solid material, preferably comprising Neodymium-doped Yttrium Alluminium Garnet (Nd:YAG) or Neodymium-doped glass, which is mounted inside a laser resonator. In order to obtain welding spots of small size in a laser welding process, laser resonator should work as much as possible at TEM₀₀ mode, i. e. the transverse laser mode should resemble as much as possible to a Gaussian distribution.

Should resonator operate according to the TEM₀₀ mode, it is possible first to enlarge the diameter of the produced laser beam by means of optical systems located within the laser cavity, e.g. an optical telescope, and then to focus the laser beam with high accuracy on the workpiece to be welded.

First of all, the transverse mode of a laser cavity is determined by the distribution of diffraction losses over the TEM₀₀ and all higher order modes. A parameter suitable for defining such a distribution is the Fresnel number N = a²/ λ L, where L is the laser cavity length, a the laser beam diameter, and λ the wavelength. For Fresnel numbers equal or slightly smaller than 1 (N ≤ 1), only the TEM₀₀ mode has losses lower than 1% per roundtrip, whereas all the other modes have losses greater than 10%. Thus, ideal TEM₀₀ operation requires Fresnel numbers just below 1.

For higher order modes, termed TEMpq, laser spot size can be defined as a circle across the laser beam, containing 90% of the energy. TEM_{pq} modes have mode width ω_{pq} = (2p + q + 1)^{1/2} x ω₀, where ω₀ is the width of the corresponding TEM₀₀ mode, with p, q, i.e. the mode TEM_{pq} index, indicating the number of angular and radial nodes in the mode profile.

The increase in beam diameter D due to higher order transverse modes can be expressed as D = MD₀, where D₀ is the laser beam diameter in TEM₀₀ mode operation. For TEM₀₀ mode operation, beam divergence is θD₀ = 4λ/π.

This multimode beam will propagate with distance in the same form as a Gaussian beam, but the Rayleigh range becomes ξ_{R} = π ω²₀/M²λ. If this beam is focused outside the laser cavity through a set of lenses having an F number F = f/D, where f is the overall focal length, and D the beam diameter at the lens, then the minimum spot size D is
D = FM² θ₀ D₀. Spot size is thus increased by a factor M² with respect to TEM₀₀ mode operation.

The transverse mode profile can be improved, by making it to be more similar to a Gaussian distribution, by increasing the length L of the laser cavity or by reducing the diameter a of the beam. Laser cavity length is given, and thus limited, by practical considerations, such as the maximum size of the welding system. A typical length of a laser cavity is in the order of 50 - 100 cm (19.68 - 39.37 inch). The beam diameter is determined by the diameter of the laser rod, which, in practice, has to be rather large (typically in the order of 4 - 10 mm (0.16 - 2.54 inch)) to obtain the required power for a welding beam. This results in a cavity with high output power, but with great Fresnel numbers in the range N = 20 - 100, which means a strong multimode behaviour, i.e. the cavity will have to support many transverse modes. The final spot size D is, thus, limited by the Fresnel number.

It has been already proposed to improve welding spot size by providing the cavity with a fixed shield member for a laser beam equipped with a gauged through opening, a laser beam being designed to pass through it. This gauged through opening is designed to effectively eliminate laser beam losses related to higher order lateral cavity modes. A decrease of the parameter M is thus obtained, with consequent decrease of welding spot size, this result being obtained with a substantial and undesired decrease of the laser beam output power, and in the long run with a wearing or destructive wear of the through opening outline.

The main object of the present invention is to provide a laser cavity based on a new concept, particularly for laser welding apparatus, which is adapted to eliminate or drastically reduce the above mentioned drawbacks faced with conventional laser welding systems.

Another object of the present invention is to provide a laser cavity for laser welding apparatus having a very simple structure and obtained at highly competitive production costs.

Another object of the present invention is to provide a laser cavity for laser welding apparatus having a high efficiency and being suitable for producing both very small welding spots with relatively low power and larger welding spots with relatively high power, the laser welder so obtained being very versatile and adaptable to a great number of practical situations.

According to one aspect of the present invention a laser cavity is provided, which comprises: at least one resonator having at least one source of exciting light, and at least one laser rod excited by the at least one light source; at least one mirror member designed to produce at least one output laser beam, the laser cavity further comprising at least one shield member having at least one through opening, the shield member being movably mounted between a working position, in which the shield member intercepts a respective laser beam at the at least one through opening thereof, and a rest position, in which the shield member does not interfere with the respective laser beam.

According to another aspect of the present invention a laser welding arrangement is provided, which comprises:
- means defining a laser cavity with an exit opening;
- at least one resonator having at least one source of exciting light, and at least one laser rod excited by the at least one light source,
- at least one mirror member designed to produce at least one output laser beam having a beam path extending through the exit opening, and
- at least one shield member movably mounted in the laser cavity for movement between a working and a rest position, the shield member having at least one through opening, the shield member being positioned between the mirror and the exit opening with at least one portion of the laser beam passing through the through opening with the shield member in the working position, and the shield member being spaced away from the beam path with the shield member in the rest position.

According to a further aspect of the present invention a method for varying the size of welding spots in a laser welder is provided, which comprises:
- providing at least one resonator having at least one source of exciting light, and at least one laser rod excited by the at least one light source;
- providing at least one mirror member designed to produce at least one output laser beam;
- providing at least one shield member having at least one through opening, the shield member being movably mounted;
- controllably shielding at least one peripheral portion of a laser beam with the shield member as a function of the power of the laser beam, thereby reducing the power and carrying out a spot weld with very small spot size.

According to the present invention, there is suggest to enhance the welding spot size by providing within the laser cavity a shield member for the laser beam, the shield member being equipped with a gauged through opening through which a laser beam can pass. This gauged through opening is arranged to effectively eliminate laser beam losses related to the higher order lateral modes of the cavity. Thus, a decrease in the parameter M will be obtained, with a consequent decrease of the welding spot size.

Further aspects and advantages of the present invention will also better appear by the following detailed description of some presently preferred, but not limiting embodiments thereof, with reference to the accompanying drawings, in which:
Figure 1 is a diagrammatic view of a conventional laser cavity;
Figure 2 is a top perspective view of a laser cavity according to the present invention in a first operation trim; and
Figure 3 is a view of the laser cavity of Figure 2 in a different operation trim.

In the accompanying drawings the same or similar components have been indicated with the same reference numerals.

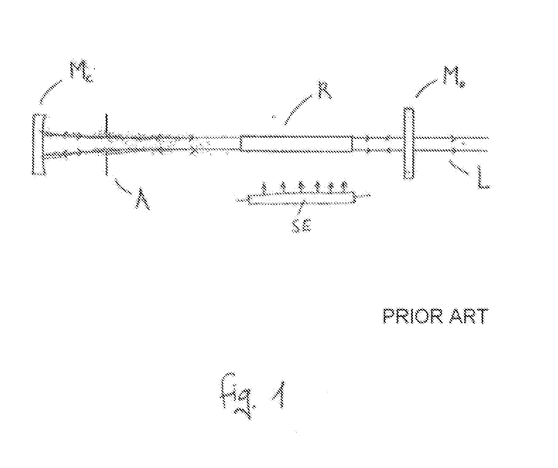

With reference, first, to Figure 1, a laser cavity according to the prior art provided with an exciting light source SE as well as a laser rod R, which can be excited by the light source SE, a mirror M_{c}, a fixed through opening A, an output coupler M₀ for a laser beam L, is schematically illustrated.

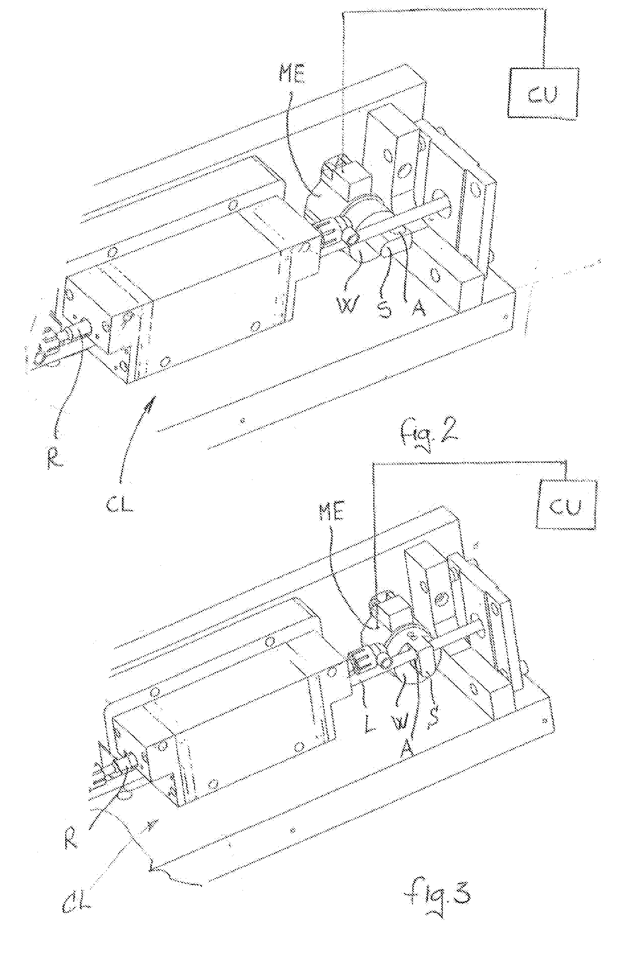

Figures 2 and 3 illustrate an embodiment of a laser cavity CL, particularly for a laser welding apparatus or welder, in which a shield member S is provided having a large thickness, typically ranging between 1 mm (0.039 inch) and 15 mm (0.59 inch), which shield member S is movably, e.g. rotatably, supported as illustrated in the drawings, about an transversal axis with respect to radius L and provided with a gauged through circular opening A. More particularly, the shield member S is supported offset on a disk W, which is keyed on the output shaft of an electrical motor ME, e.g. a preferably reversible step-type motor (stepper motor). Motor ME is controlled by a programmable electronic control unit CU, which is suitable for controlling an angular displacement of the shield member S as a function of the power of the laser beam L between an upright or working position of the shield member S, in which, as shown in Figure 3, the shield S is placed in such a manner as to intercept the laser beam with its opening A centred about the beam L, and a turned down or rest position of the shield member S, in which, as shown in Figure 2, the shield member S does not intercept the laser beam L.

Typically, with a laser beam having a relatively high power, the control unit CU drives motor ME so that the shield member S is placed in its turned down or rest position, whereas with a laser beam having a relatively low power, the shield member S will be located in its upright or working position. When the shield member S is displaced into its working position, it shields the peripheral divergent portion of the laser beam L, i.e. the transversal mode profile of the beam L is enhanced.

With this solution a laser spot welding with spots having very small size, typically in the order of 0.15 mm (0.006 inch). Such a size was not been obtainable up to now with any conventional welding system. The invention permits very small workpieces to be welded with moderate power of the laser beam L, i.e. with no damages or structural wear thereto. In other words, the power loss to which the laser beam is subjected due to the presence of the shield member in its working position is acceptable and more than counterbalanced by the possibility of very small workpieces being welded with very small welding spots which are not likely to damage the workpiece structure.

On the other hand, when relatively large workpieces have to be welded, the power of the laser beam L generated within the laser cavity will be greater, and thus the control unit CU will drive the motor ME so as to displace the shield member S into its rest position, thereby permitting welding spot having a size of the order of 0.30 mm (0.012 inch) or more to be obtained.

The above described laser cavity is susceptible to numerous modifications and variations within the scope defined by the claims.

Thus, for example, the shield member S can be supported in a different way from that illustrated in drawings, and typically, instead of an angular displacement, it can carry out a round trip translation or rotation-translation movement. This latter solution is particularly advantageous in the case in which a plurality of through openings is formed in the shield member S, each through opening having size and shape different from the other in order to obtain a laser cavity CL having a greater versatility.

## Claims

1. A laser cavity comprising:
- at least one resonator having at least one source of exciting light, and at least one laser rod excited by said at least one light source,
- at least one mirror member designed to produce at least one output laser beam,
**characterized in that** it comprises at least one shield member (S) having at least one through opening (A), said shield member being movably mounted between a working position, in which said shield member intercepts a respective laser beam (L) at said at least one through opening (A), and a rest position, in which said shield member does not interfere with said respective laser beam (L).

2. A laser cavity as claimed in claim 1, **characterized in that** it comprises at least one electrical motor (ME) provided with an output shaft, at least one support member (W) mounted integral in rotation with a respective output shaft, and designed to support a respective shield member (S), and a programmable electronic control unit (CU) suitable for controlling said at least one electrical motor (ME) as a function of the power of a respective laser beam (L), thereby controlling the displacement of said at least one shield member (S) between a rest position and a working position.

3. A laser cavity as claimed in claim 1 or 2, wherein said at least one shield member (S) when in its working position enhances the transverse mode profile of said at least one laser beam (L), thereby allowing a welding at relatively low power to be carried out, and obtaining welding spot having a size in the order of 0.15 mm (0.006 inch).

4. A laser cavity as claimed in any previous claim, wherein said at least one shield member (S) has a plurality of through openings having different configuration and size with respect to one another.

5. A method for varying the size of welding spots in a laser welder, **characterized in that** it comprises:
- providing at least one resonator having at least one source of exciting light, and at least one laser rod excited by said at least one light source;
- providing at least one mirror member designed to produce at least one output laser beam;
- providing at least one shield member (S) having at least one through opening (A), said shield member being movably mounted;
- controllably shielding at least one peripheral portion of a laser beam with said shield member as a function of the power of the laser beam, thereby reducing the power and carrying out a spot weld with very small spot size.

6. A laser welding arrangement, comprising:
- means defining a laser cavity with an exit opening;
- at least one resonator having at least one source of exciting light, and at least one laser rod excited by said at least one light source,
- at least one mirror member designed to produce at least one output laser beam having a beam path extending through said exit opening, and
- at least one shield member (S) movably mounted in said laser cavity for movement between a working and a rest position, said shield member having at least one through opening (A), said shield member being positioned between said mirror and said exit opening with at least one portion of said laser beam passing through said through opening with said shield member in said working position, and said shield member being spaced away from said beam path with said shield member in said rest position.

7. A laser welding arrangement as claimed in claim 6, **characterized in that** it comprises at least one electrical motor (ME) provided with an output shaft, at least one support member (W) mounted integral in rotation with a respective output shaft, and designed to support a respective shield member (S), and a programmable electronic control unit (CU) suitable for controlling said at least one electrical motor (ME) as a function of the power of a respective laser beam (L), thereby controlling the displacement of said at least one shield member (S) between a rest position and a working position.

8. A laser welding arrangement as claimed in claim 6 or 7, wherein said at least one shield member (S) when in its working position enhances the transverse mode profile of said at least one laser beam (L), thereby allowing a welding at relatively low power to be carried out, and obtaining welding spot having a size in the order of 0.15 mm (0.006 inch).

9. A laser welding arrangement as claimed in any claim 6 to 8, wherein said at least one shield member (S) has a plurality of through openings having different configuration and size with respect to one another.
